# DEMANDE DE BREVET EUROPEEN

(11) **EP 3 344 011 A1**
(43) Date de publication de la demande: **04.07.2018**
(21) Numéro de dépôt: 16207177.3
(22) Date de dépôt: 28.12.2016
(51) Int. Cl.: H05B 33/08, A61C 19/06

(54) **GENERATEUR DE LUMIERE POUR LE BLANCHIMENT DES DENTS**

(71) Demandeur: Bochenek, Stephane, 91330 Yerres (FR)
(72) Inventeur: Bochenek, Stephane, 91330 Yerres (FR)
(74) Mandataire: Chaffraix, Jean

(57) **Abrégé**

Le générateur de lumière comprend une pluralité de diodes électroluminescentes d'émission de lumière (101) et des moyens de commande (12, 14,15). Conformément à l'invention les diodes électroluminescentes d'émission de lumière (Led) sont des composants miniatures de forme carrée ou rectangulaire, aptes à émettre une lumière de forte intensité avec une faible consommation de courant et du type dit CMS pour « composant monté en surface ». Selon une autre forme de réalisation, les diodes électroluminescentes d'émission de lumière sont des composants sub-miniatures. Selon une caractéristique particulière, le générateur comprend un microcontrôleur programmable (3) autorisant plusieurs modes de fonctionnement.

## Description

L'invention concerne de manière générale le blanchiment des dents. Plus particulièrement l'invention concerne un générateur de lumière à diodes électroluminescentes pour le blanchiment des dents.

Les causes les plus fréquentes de la décoloration des dents chez les personnes sont le vieillissement et la consommation de substances de coloration. Avec le vieillissement, la structure minérale des dents change et peut causer une diminution de la brillance de l'émail. Les dents peuvent également devenir colorées du fait de pigments bactériens, de produits alimentaires consommés, du tabac et de certains médicaments.

Le blanchiment des dents a gagné en popularité ces dernières années et différentes solutions sont proposées, soit directement aux consommateurs dans le commerce, soit par les dentistes à leurs patients.

En vente directe aux consommateurs, il est connu une solution comprenant un agent de blanchiment, sous la forme d'un gel ou d'une pate dentaire, et un générateur de lumière. Le gel dentaire est appliqué sur la surface des dents et le générateur de lumière est utilisé pour l'activation et la polymérisation de l'agent de blanchiment. Différentes compositions d'agent de blanchiment sont connues, les plus efficaces contenant du peroxyde d'hydrogène. Les générateurs de lumière associés sont des dispositifs portables et légers que l'utilisateur peut tenir dans sa main et placer dans sa boucle pour l'éclairage de l'agent de blanchiment. Ces générateurs de lumière utilisent des diodes électroluminescents LED (« Light Emitting Diode » en anglais) qui émettent une lumière bleue froide, riche en en ultra-violet.

Les générateurs de lumière connus pâtissent d'un certain nombre d'inconvénients et d'insuffisances.

La lumière bleue émise manque généralement d'uniformité et l'agent de blanchiment à la surface des dents n'est pas éclairé de manière homogène. Il peut en découler des défauts de blancheur qui persistent sur les dents après le traitement.

Le temps d'exposition à la lumière et la puissance lumineuse sont rarement réglables et restent insuffisamment contrôlés dans les générateurs connus, qui sont la plupart du temps conçus et vendus pour des compositions de blanchiment spécifiques. Lorsqu'une possibilité de réglage ou un contrôle d'exposition existe, cette possibilité reste cependant très limitée et peu précise. Les utilisateurs peuvent donc encourir des risques de surexposition à la lumière, notamment lorsque le gel dentaire de blanchiment utilisé n'est pas adapté au générateur ou inversement. Une surexposition lumineuse peut entrainer un sur-échauffement de la pulpe dentaire et des tissus des gencives, ce qui peut avoir des conséquences sur la santé dentaire et buccale.

La présente invention a pour objectif d'apporter des solutions aux inconvénients exposés ci-dessus de la technique antérieure en proposant un générateur de lumière de nouvelle génération, bien adapté pour une utilisation directe les consommateurs et aussi par les professionnels.

Selon un premier aspect, la présente invention concerne un générateur de lumière de blanchiment des dents en association avec un gel dentaire de blanchiment comprenant une pluralité de diodes électroluminescentes d'émission de lumière et des moyens de commande. Conformément à l'invention, les diodes électroluminescentes d'émission de lumière sont des composants miniatures de forme carrée ou rectangulaire, aptes à émettre une lumière de forte intensité avec une faible consommation de courant et du type dit CMS pour « composant monté en surface ».

Selon une autre forme de réalisation, les diodes électroluminescentes d'émission de lumière sont des composants sub-miniatures.

Selon une caractéristique particulière de l'invention, les diodes électroluminescentes d'émission de lumière sont montées électriquement en parallèle et alimentées par un circuit d'attaque de diodes de type générateur de courant.

Selon une autre caractéristique particulière de l'invention, les moyens de commande comprennent un microcontrôleur programmable autorisant un fonctionnement du générateur selon une pluralité de modes de fonctionnement.

Selon encore une autre caractéristique particulière de l'invention, le générateur comprend également un écran et une pluralité de touches connectés au microcontrôleur programmable pour la commande du générateur dans ladite pluralité de modes de fonctionnement à travers des menus s'affichant sur l'écran et des actions d'appui sur lesdites touches.

Selon encore une autre caractéristique particulière de l'invention, les diodes électroluminescentes d'émission de lumière sont de type monochromatique ou plurichromatique.

D'autres avantages et caractéristiques de la présente invention apparaîtront plus clairement à la lecture de la description ci-dessous de plusieurs formes de réalisation particulières en référence aux dessins annexés, dans lesquels :
- la Fig.1 est une vue de dessus d'un générateur de lumière selon l'invention ;
- la Fig.2 est le schéma électrique du générateur de lumière de la Fig.1 ;

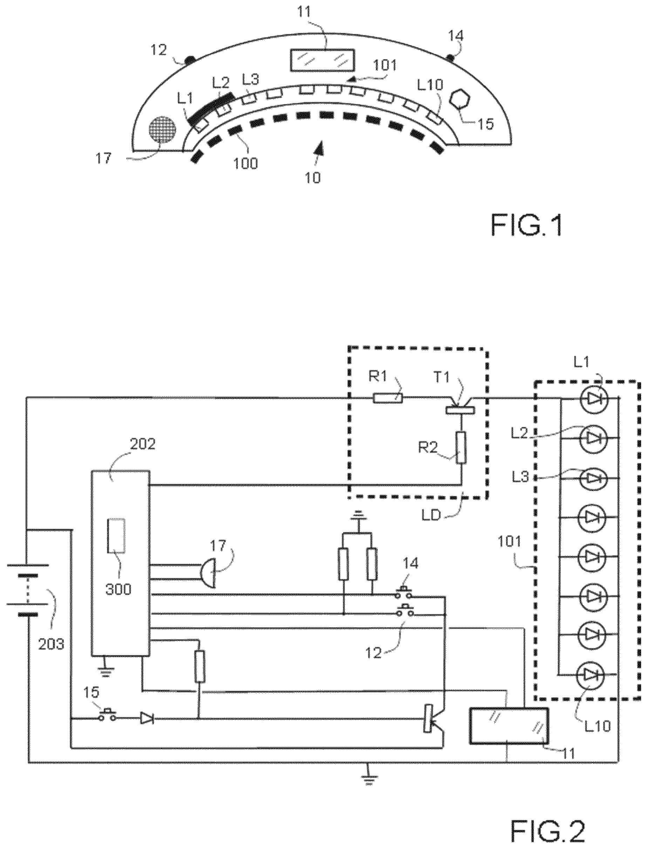

L'architecture matérielle et le fonctionnement d'une forme de réalisation particulière 1 du générateur de lumière selon l'invention sont maintenant décrits en référence aux Figs.1 et 2.

Ce générateur 1 se présente sous la forme d'un boîtier prévu pour tenir dans la main et ayant une partie avant 10 de forme sensiblement semi-circulaire pour correspondre à la courbure d'une mâchoire humaine sur laquelle il doit s'appliquer.

La vue extérieure de dessus du générateur 1 à la Fig.1 montre les différents moyens d'interface homme-machine équipant le générateur. Ces moyens d'interface comprennent, notamment un écran 11, des touches de commande 12, 14, 15 et un bruiteur 17 situé à l'intérieur du boîtier et débouchant à l'extérieur.

La touche 15 est une touche de marche/arrêt (ON/OFF). Les touches 12 et 14 sont utilisés pour régler l'affichage de l'heure et différents minutages, pour définir le temps d'apparition du son par le bruiteur 17 et pour commnder la puissance de la lumière émise par le générateur 1.

Dans la partie intérieure de son boîtier, le générateur 1 comporte essentiellement une gouttière 100 et un circuit de réseau de diodes 101 qui suivent la forme semi-circulaire de la partie avant 10 du générateur. Il est prévu aussi un circuit imprimé destiné à réunir les différents éléments d'un circuit de commande explicité ci-dessous à l'aide de la figure 2.

Le circuit de commande comporte un microcontrôleur programmable 202, une batterie rechargeable 203, le buzzer 17, les touches 12,14,15 dont les parties visibles à l'extérieur du boîtier sont montrées à la Fig.1.

Dans cette forme de réalisation de l'invention, la gouttière 100 est destinée à permettre le montage d'un embout buccal (non représenté) sur le générateur 1. Cet embout buccal est placé par l'utilisateur entre ses lèvres et ses gencives. Il participe au maintien en position du générateur 1 en regard des dents à traiter et au recueil des substances salivaires. Il est amovible de manière à pouvoir être nettoyé et remplacé si besoin.

Le circuit de réseau de diodes 101 est formé d'une pluralité de diodes électroluminescentes L1, L2, ...L10 qui sont montées électriquement en parallèle et comporte leurs cathodes reliées ensemble à une masse du circuit et leurs anodes qui sont aussi reliées ensemble et alimentées en courant par un circuit LD qui est un circuit d'attaque de diodes, dit « LED Driver » en anglais, ayant une configuration de générateur de courant. La fonction de générateur de courant du circuit LD est ici obtenue de manière classique au moyen d'une transistor T1 de type PNP et de deux résistances R10 et R11. Une électrode de base du transistor T1 est reliée à une sortie de commande du microcontrôleur 202 qui commande le courant injecté dans les diodes Led. Le microcontrôleur 202 a ainsi la possibilité de commander et régler l'intensité lumineuse qui est émise par le générateur 1.

Conformément à l'invention, les diodes Led sont des composants de type CMS (Composant Monté en Surface), de forme carrée ou rectangulaire. Les diodes Led utilisées dans l'invention sont des composants miniatures ou sub-miniatures, aptes à émettre une lumière de forte intensité avec une faible consommation de courant.

Les diodes électroluminescentes Led utilisées ici sont par exemple du type de celles commercialisées par la société Philips dans sa gamme Lumineds (« Philips » et « Lumineds » sont des marques déposées).

Les diodes Led sont généralement choisies pour avoir une longueur d'onde d'émission de lumière qui soit celle qui réagit le mieux avec le gel dentaire de blanchiment utilisé. Une lumière bleue froide ou une longueur d'onde dans la plage de 480 nm à 510 nm sont souvent adaptées. Conformément à l'invention, selon l'application de générateur envisagée, il pourra être fait appel à des diodes Led monochromatiques ou à des diodes bichromatiques ou trichromatiques, les diodes plurichromatiques autorisant une adaptation de la couleur de la lumière émise pour différents gels dentaires de blanchiment utilisés avec un même générateur.

L'invention permet la réalisation de rangées de diodes Led très serrées et denses, comprenant un plus grand nombre de diodes par rangée, sans accroissement de la consommation électrique du générateur, voire avec une réduction de celle-ci, par rapport aux générateurs de la technique antérieure. Ce plus grand nombre de diodes, favorisé par la forme carrée ou rectangulaire des diodes et la technologie CMS, permet d'améliorer sensiblement l'uniformité du faisceau lumineux émis par le générateur selon l'invention, par rapport aux générateurs de la technique antérieure.

Outre le circuit de réseau de diodes 101, le circuit imprimé supporte également tous les autres composants électroniques et électriques du générateur 1 et assure les connexions électriques nécessaires à la réalisation du circuit électronique du générateur 1.

Dans cette forme de réalisation, le microcontrôleur 202 est aussi un composant de type CMS qui est reporté sur le circuit imprimé. Le microcontrôleur 202 est géré par un microprogramme contenu dans une mémoire 300 afin de commander le fonctionnement de l'ensemble du générateur 1. On notera ici que ce microprogramme pourra avantageusement être téléchargé dans le microcontrôleur 202 à travers une prise micro-USB (non montrée sur les figures) lors de la programmation de l'appareil en fin de fabrication de celui-ci.

La batterie rechargeable 203 est typiquement de type Lithium-Ion et est rechargeable à travers une prise micro-USB, par exemple, sous la commande du microcontrôleur 202.

Le bruiteur 17 permet une interface homme-machine par l'émission de sons correspondant par exemple à la prise en compte de l'appui d'une touche, à la fin d'une période d'exposition à la lumière, etc.

L'écran 11 et les touches 12,14,15 sont des éléments essentiels autorisant la commande du générateur selon la manière suivante :
- Le bouton 15 détermine la mise en marche du générateur de l'invention et sa mise hors service.
- Le bouton 12 provoque l'allumage de l'écran 11, s'il y a lieu.
- Le bouton 12 permet, après un appui supérieur à 5s, par exemple, la mise à l'heure apparaisant sur l'écran 11.
- Le bouton 12 , lorsque le générateur est à l'état de mise à l'heure, permet le réglage des heures par leur acroissement.
- Le bouton 14 , lorsque le générateur est à l'état de mise à l'heure, permet le réglage des minutes par leur acroissement.
- Le bouton 14 permet, lorsque l'écran 11 est allumé la programmation du son du buzzer 17 par tranche de 10 minutes, par exemple.
- Le bouton 14 après un appui supérieur à 5s , par exemple, permet le réglage de la puissance lumineuse sur 3 paliers, par exemple.

Ainsi, on peut obtenir une pluralité de modes de fonctionnement.

Comme montré à la Fig.2, l'ensemble des touches 12, 14 et 15 sont reliées à un port d'entrée du microcontrôleur 202. L'écran 11 est relié à un port de sortie du microcontrôleur 202 et reçoit ses données d'affichage de celui-ci. Le buzzer 17 est également raccordé à un port d'entrée/sortie dédié du microcontrôleur 202.

Dans toutes les formes de réalisation du générateur de l'invention, le microcontrôleur 202 ne déterminera que des choix et des possibilités de traitement compatibles avec l'agent de blanchiment utilisé et sa santé dentaire et buccale.

Bien entendu, l'invention ne se limite pas aux formes de réalisation qui ont été décrites plus particulièrement ici à titre d'exemple. L'homme du métier, selon les applications de l'invention, pourra apporter différentes modifications et variantes qui entrent dans la portée des revendications ci-annexées.

## Revendications

1. Générateur de lumière de blanchiment des dents en association avec un gel dentaire de blanchiment comprenant une pluralité de diodes électroluminescentes (101) d'émission de lumière et des moyens de commande, **caractérisé en ce que** lesdites diodes électroluminescentes d'émission de lumière (Led) sont des composants miniatures de forme carrée ou rectangulaire, aptes à émettre une lumière de forte intensité avec une faible consommation de courant et du type dit CMS pour « composant monté en surface ».

2. Générateur de lumière selon la revendication 1, **caractérisé en ce que** lesdites diodes électroluminescentes d'émission de lumière (Led) sont des composants sub-miniatures.

3. Générateur de lumière selon la revendication 1 ou 2, **caractérisé en ce que** lesdites diodes électroluminescentes d'émission de lumière (Led) sont montées électriquement en parallèle (101) et alimentées par un circuit d'attaque de diodes de type générateur de courant (LD).

4. Générateur de lumière selon l'une quelconque des revendications 1 à 3, **caractérisé en ce que** lesdits moyens de commande comprennent un microcontrôleur programmable (202) autorisant un fonctionnement du générateur (1) selon une pluralité de modes de fonctionnement.

5. Générateur de lumière selon la revendication 4, **caractérisé en ce qu'**il comprend une mémoire de programme pour contenir un microprogramme (300) de commande du générateur (1) implanté dans ledit microcontrôleur programmable (202).

6. Générateur de lumière selon la revendication 4 ou 5, **caractérisé en ce qu'**il comprend un écran (11) et une pluralité de touches (12, 14) connectés audit microcontrôleur programmable (202) pour la commande du générateur (1) dans ladite pluralité de modes de fonctionnement à travers des menus s'affichant sur ledit écran (11) et des actions d'appui sur lesdites touches (12 et 14).

7. Générateur de lumière selon l'une quelconque des revendications 1 à 6, caractérisé en ce lesdites diodes électroluminescentes d'émission de lumière (Led) sont de type monochromatique ou plurichromatique.
